Europäisches Patentamt

European Patent Office

Office européen des brevets

(11) Publication number: **0 174 211**
A2

# (12) EUROPEAN PATENT APPLICATION

(21) Application number: **85306364.2**

(22) Date of filing: **06.09.85**

(51) Int. Cl.⁴: **B 60 P 7/10**

(30) Priority: **07.09.84 GB 8422681**

(43) Date of publication of application:
**12.03.86 Bulletin 86/11**

(84) Designated Contracting States:
**BE DE FR GB NL**

(71) Applicant: **McCann, Thomas Joseph**
**Simark Engineering Company Griffin Industrial Estate**
**Penncricket Lane**
**Rowley Regis West Midlands(GB)**

(71) Applicant: **McCann, Patrick**
**Simark Engineering Company Griffin Industrial Estate**
**Penncricket Lane**
**Rowley Regis West Midlands(GB)**

(72) Inventor: **McCann, Thomas Joseph**
**2A Knottsall Lane**
**Warley West Midlands(GB)**

(74) Representative: **Shaw, Laurence**
**George House George Road**
**Edgbaston Birmingham B15 1PG(GB)**

(54) **Locking system especially for pallets.**

(57) A locking system for holding a bank of pallets to a track (T) comprises an abutment (A) to be urged against the outermost pallet (P) and having a cam surface (C1), and an element (E) engagable with the track (T) and having a cam surface (C2) to be moved by a handle (H) at the end of a disc (9) to urge the cam surfaces (C1,C2) together, and locking means (12,13) to hold the disc (9) in the locking position.

EP 0 174 211 A2

LOCKING SYSTEM

ESPECIALLY FOR PALLETS

The invention relates to a locking system, and in particular
to a system designed to limit movement of a bank of
containers relative to a support.  In one particularly
useful embodiment of the invention, the locking system is
applied to a number of roller pallets loaded into a van such
as a delivery van, and is useful in holding the pallets
against undesired movement, e.g. during transport.

According to one aspect of this invention there is provided
a track against which pallets or the like may be placed in
side-by-side relation, locking means to be abutted against
the outermost pallet to lock the pallets together
characterised in that that locking means comprises an
abutment and an element, each of which is to be mounted on
the track and at least one of which is to be anchored to the
track, the abutment and the element having a first cam part
and a second cam part, one of these parts being associated
with a rotary means, and arranged such that rotation of the
rotary means causes the cam parts to engage together and to urge the pallets together and to the track.

Most preferably the rotary means are associated with the locking element and are arranged to rotate about a plane transverse to the longitudinal axis of the track. Often there is little room, and by placing the rotary means in this position, little space is needed for the locking action. Another advantage is that hammering is avoided: while anyone can use a hammer, e.g. to drive a wedge, in practice damage is often done, and parts need to be replaced frequently.

It is much preferred that the locking element be provided with means by which it may be locked in engagement with the track. It is usual for the track to have longitudinally spaced apart holes, and the engagement means may comprise a peg received in one such hole. It is also much preferred that locking means be present to lock the rotary means, preferably a disc, in the position where the cam parts, e.g. surfaces, are engaged.

It is preferred to provide a separate locking abutment and element. Either of these may be shaped to abut or be part of the wall of a pallet.

The track is incorporated in a land, sea or air vehicle. The invention is seen to optimum effect in a delivery van adapted to transpot roller pallets.

In a preferred aspect the invention provides, locking means for the purpose specified, the locking means comprising

    - an abutment having a base slidable along the track and having a flange to abut a pallet and a bollard presenting a cam surface, and

    - a locking element having a base slidable along the track and having a peg engageable with a selected hole in the track, an axle mounted in a wall upstanding from the base, a rotary disc mounted on the axle, the disc having an extension formed with a cam surface engageable with the cam surface of the abutment, means for rotating the disc, and means for locking the disc against rotational movement when the cam surfaes are engaged.

In order that the invention may be well understood it will now be described with reference to the accompanying diagrammatic drawing which is an elevation, partly in section, of a locking system in engagement with pallets.

The locking system comprises a known track T having longitudinally spaced apart holes 1. The track is mounted on the opposite side walls of a truck or delivery van, e.g.
for the transport of refrigerated foodstuffs.  The
foodstuffs are placed in roller pallets P and an abutment A
is slid along the track T to abut the last pallet P.  The
abutment A comprises a base 2 having depending side walls 3
by which the abutment may be slid along the track T.  An
upstanding flange 4 is present at one end of the base 2, to
be abutted against the outer side wall of the pallet P.  A
bollard 5 is present at the other end of the base, and
presents an outer rounded cam surface C1.

A lock element E comprises a raised floor 6 having depending
side walls 7 by which the element may be slid along the
track T.  A spring biased peg 8 extends below the floor 6
and is engageable in a selected hole 1 to lock the element
with respect to the track.  A disc 9 is mounted at one side
of the floor on an axle 10 and has a part cylindrical
extension 11 presenting a second cam surface C2 facing the
bollard 5 of the abutment.  The disc 9 is arranged for
rotation by a short handle H so that rotation of the disc 9
in one direction causes the second cam surface C2 to engage
the first cam surface C1 and apply a compressive force on to
the bank of pallets P.  There is a series of holes 12 around
the periphery of the disc, and a locking pin 13 mounted
above the floor 6 of the element may be urged into one of these holes to lock the disc against rotation.

In use, the driver loads the pallets in the van on shelves.
When he has loaded the last pallet, he pushes it as far
forward as it will go, and then slides the abutment A along
the track T to lie against the last pallet P.  He then
slides the locking element E on the track T, and engages its
peg 8 with the adjacent hole 1 to anchor the element E in
the track T.  The disc 9 is then rotated by means of the
short handle H, to bring the second cam surface C2 into
engagement with the first cam surface C1 and so to urge the
pallets together and against relative movement, e.g. during
transport.  The disc 9 is then locked in position by means
of the locking pin 13.  To release the pallets, the parts
are disengaged in reverse order.  Because the parts are
small, the operator can engage and disengage them even in a
confined space; the fact the disc 9 rotates in a plane
transverse to the longitudinal axis of th track T is an
especial advantage in this respect.  The parts are made of
robust metal, and may easily be used even by unskilled
labour.

The invention is not limited to the embodiment shown.  For
example, the abutment may be adapted to clip on to the wall
of the pallet.  The element may be engaged with the track other than by a reception of a peg in a hole; the abutment may have the rotary cam surface and the locking element may be a fixed one.  The disc may be rotated by a threaded bar extending through element and manipulable from the end of the element.

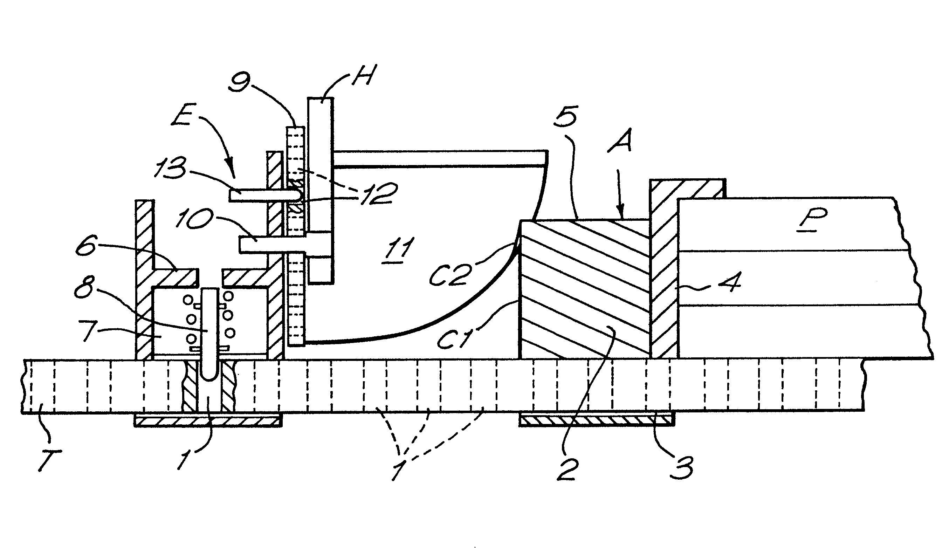

## CLAIMS

1.      A track (T) against which pallets (P) or the like
may be placed in side-by-side relation, locking
means to be abutted against the outermost pallet to
lock the pallets together characterised in that the
locking means comprises an abutment (A) and an
element (E), each of which is to be mounted on the
track (T) and at least one of which is to be
anchored to the track, the abutment (A) and the
element (E) having a first cam part (C1) and a
second cam part (C2), one of these parts being
associated with a rotary means (9) and arranged such
that rotation of the rotary means (9) causes the cam
part (C1, C2) to engage together and to urge the
pallets (P) together and to the track (T).

2.      A track according to Claim 1 characterised in that
the rotary means (9) are associated with the locking element (E) and are arranged to rotate about a plane
transverse to the longitudinal axis of the track
(T).

3.      A track according to Claim 1 characterised in that
        the locking element (E) is provided with means (8)
        by which it may be locked in engagement with the
        track (T).

4.      A track according to Claim 3 characterised in that
        there are longitudinally spaced apart holes (1) in
        the track (T), and the engagement means is a peg (5)
        received in one such hole (1).

5.      A track according to Claim 4 characterised in that
        locking means (12, 13), are present to lock the
        rotary means (9), in the position when the cam parts
        (C1, C2) are engaged.

6.      A vehicle incorporating a track (T) against which
        pallets (P) or the like may be placed in side-by-
        side relation, locking means to be abutted against
        the outermost pallet to lock the pallets together
        characterised in that the track (T) is according to
        any of Claims 1 to 5.

7.    A vehicle according to Claim 6 characterised in that the vehicle is a delivery van having roller pallets.

8.    Locking means for holding pallets (P) to a track (T) having spaced apart holes (1) characterised by

- an abutment (A) having a base (2) slidable along the track (T) and having a flange (4) to abut a pallet (P) and a bollard (5) presenting a cam surface (C1), and

- a locking element (E) having a base (6) slidable along the track (T) and having a peg (8) engageable with a selected hole (1) in the track (T), an axle (10) mounted in a wall upstanding from the base (6), a rotary disc (9) mounted on the axle (10), the disc (9) having an extension formed with a cam surface (C2) engageable with the cam surface (C1) of the abutment (A), means (H) for rotating the disc (9), and means (12, 13) for locking the disc (9) against rotational movement when the cam surfaces (C1, C2) are engaged.